Europäisches Patentamt

(19) European Patent Office

Office européen des brevets

(11) Publication number: **0 158 766**

**A1**

(12) # EUROPEAN PATENT APPLICATION

(21) Application number: **85100013.3**

(22) Date of filing: **02.01.85**

(51) Int. Cl.⁴: **G 06 F 15/20**

(30) Priority: **30.03.84 US 595079**

(43) Date of publication of application:
**23.10.85 Bulletin 85/43**

(84) Designated Contracting States:
**BE DE FR GB**

(71) Applicant: WANG LABORATORIES INC.
One Industrial Avenue
Lowell, MA 01851(US)

(72) Inventor: Carlson, Kenneth Alan
46 Princeton Road
Sterling, MA 01564(US)

(72) Inventor: LeBrun, John Francis
708 Chelmsford Street
Lowell, MA 01851(US)

(72) Inventor: Giacomazzo, Salvatore
80 Edgehill Road
Stow, MA 01775(US)

(72) Inventor: Saperia, Jonathan David
13B Nova Drive
East Pepperell, MA 01437(US)

(74) Representative: Behrens, Dieter, Dr.-Ing. et al,
Patentanwälte WUESTHOFF-V.
PECHMANN-BEHRENS-GOETZ Schweigerstrasse 2
D-8000 München 90(DE)

(54) Electronic processing with forms.

(57) A method and apparatus for operating with pre-printed forms on electronic office processing equipment by using a printer under control of a video terminal keyboard to identify the location and length of blanks on a pre-printed form and then displaying lines on the video display having the same length and relative position as on the form. Editing functions are used to add captions adjacent to the lines to indicate what information is to be entered on each blank line in the corresponding form. The displayed lines and captions are a form template for the particular pre-printed form and is stored. When the processing equipment is to be used to enter data for the pre-printed form, the associated form template is displayed on the video display and the appropriate information is entered onto the blank lines and then stored. When there is need for a hard copy, a pre-printed form is placed in the printer and the stored information is typed into the blanks. The system locates the blanks to fill them in using the location and length information stored when creating the form template. Features are the ability to delete and edit information entered and stored using the form template, and to merge print some or all the stored information into a form document other than the pre-printed form.

PATENTANWÄLTE

# WUESTHOFF - v. PECHMANN - BEHRENS - GOETZ
### EUROPEAN PATENT ATTORNEYS

**0158766**

EP-58 828

D-8000 MÜNCHEN 90
SCHWEIGERSTRASSE 2

TELEFON: (089) 66 20 51
TELEGRAMM: PROTECTPATENT
TELEX: 5 24 070

## ELECTRONIC PROCESSING WITH FORMS

This invention relates to electronic office processing equipment and more particularly to equipment and a method for entering information into such equipment and later printing it out on a pre-printed form.

What is disclosed is equipment and a method for quickly and easily adapting electronic office processing equipment to create, enter, edit and store information on templates for pre-printed business forms, and later have the information printed on the forms in specific blank spaces.

In the prior art the use of electronic office processing equipment to automate data entry tasks is well known. In one mode of operation a standard business form is entered into the equipment with blanks on the form to be filled in identified in a special way. In operation a user, such as an insurance claims processor, calls up an appropriate standard form to be displayed on a video display and uses a keyboard to enter appropriate information into the blanks of the form displayed on the screen. After the form is filled in, a key operation by the user causes only the data that has been entered into the blanks to be stored. In this manner, the form itself is not stored a multiplicity of times. When it is desired to print outputs of the standard form, filled in with earlier entered and stored data, a special print function is used to print the form with the blanks filled in with a set of previously entered data.

One shortcoming with the above described prior art forms technique is that a form must be typed into the system via the keyboard in order to implement the forms mode. This is impossible for forms that have other than alpha numeric characters thereon.

It is an object of the invention as characterized in the appendent claims to remedy the prior art shortcomings of form implentation.

In accordance with the teaching of the present invention, we teach equipment and a method for implementing a forms mode in an electronic office processor used in an office environment. The electronic processor has a video terminal, a keyboard, a microprocessor whether located in the terminal or in a separate box, memory, and a daisy wheel printer. The user of our system first selects our novel forms mode as the mode of operation. A pre-printed form with anything printed thereon is placed in the daisy wheel printer and the print head thereof, operating under control of the microprocessor, is moved using cursor keys on the key board. Using the print head moved with cursor keys, the user locates the position of, and the beginning and end of each space on the pre-printed form in which information is to be entered via the keyboard to complete the form. At the same time as the print head and platen of the printer are being moved to place the print head at the beginning and end of each such space, lines are drawn on the video display of the same length as the blank spaces on the form, and in the same relative position to each other on the display as on the form in the printer. This is the beginning of a form template which is then edited to give it a title and to put brief information adjacent to each line on the display to indicate what information should be entered thereat. The end result is a form template on the display which is then stored in the memory which is part of the electronic office processor. The actual pre-printed form is never actually entered and stored in the system memory.

**0158766**

Thereafter, when it is desired to enter information into a particular form, the appropriate form template is read out of the system memory and displayed on the screen. The user enters the appropriate information onto the lines of the template, prompted by the captions adjacent to each line, and when finished the user operates a key which causes the newly entered information to be stored in the memory.

At a later time it may be desired to generate completed forms with any blanks thereon filled in with the aforementioned entered and stored information. The particular stored information to be printed on the forms is selected and the daisy wheel printer is loaded with a supply of the pre-printed forms either by an automatic sheet feeder, or by an endless type supply where the forms are attached end to end but are perforated for later separation. The forms may also be manually fed into the printer by the user. The selected information is printed in the appropriate blanks on the pre-printed forms to produce completed forms.

The invention will be better understood on reading the following detailed description in conjunction with the drawing in which:

Figure 1 is a block diagram of an electronic office processing system utilizing the present invention;

Figure 2 is a representation of a pre-printed form on which are blanks to be filled in;

Figure 3 is a representation of the resulting forms template for the form in Figure 2 and created using our invention;

Figure 4 is the first menu appearing on the display screen when the forms creation mode is called;

Figure 5 is the forms printing menu appearing on the display screen when pre-printed forms are to be automatically filled in with previously entered and stored information;

Figure 6 is the utilities menu appearing on the display screen identifying miscellaneous operations with our novel forms mode;

Figure 7 is a sub-menu appearing on the display screen following a selection on the utilities menu;

Figure 8 is a another sub-menu appearing on the display screen following a selection on the utilities menu;

Figure 9 is a sub-menu appearing on the display screen following a selection on the forms printing menu; and

Figure 10 is a representation of the storage of a form template and information entered and stored using the particular form template, and a selection and condensation of this stored information for subsequent merge type printing on a document different than the pre-printed form from which the form template was made.

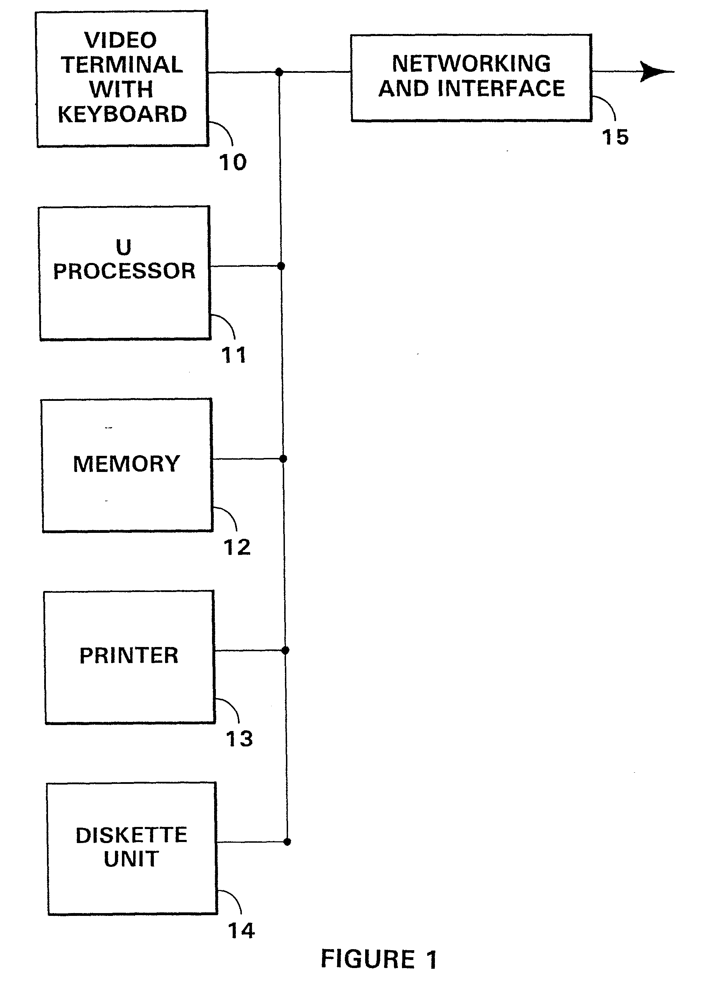

In Figure 1 is shown a block diagram of an electronic office processing system incorporating our invention. There is a video terminal including a keyboard 10 with the video terminal being a visual output from the system to the user, and the keyboard being an input by the user to the system. Microprocessor 11 functions under control of operating system software and applications software that are stored in memory 12 in a manner well-known in the art. Memory 12 is also used for storage of information being processed while the electronic office processing system shown in Figure 1 is in operation. A daisy wheel printer 13 is another output from the system and is used in implementing our novel forms mode of operation, as well as to be used for standard printing operations. Diskette unit 14 is well known in the art and uses standard industry floppy diskettes for storage and retrieval of information. Diskette unit 14 and memory 12 are used with the present invention for the storage of forms templates and information records generated using forms templates in accordance with the teaching of our invention. Networking and communications interface 15 permits connection to other systems via communications networks such as telephone systems, or to other electronic office processing equipment hooked together in a local network arrangement, both in a manner well know in the art. With the local network arrangement hard disk memories (not shown) may be utilized for long-term storage and retrieval of forms templates and information records generated therewith.

-6-

The electronic office processing system shown in Figure 1 may be the type disclosed in detail in U.S. Patent Application No. 882,005, entitled Management Communication Terminal System, Filed November 10, 1982 in the names of A. Wang, S. Fry, S. Ho, J. Smutek, and assigned to the same assignee as the present invention. The information generated in the form of records created using our novel forms template mode of operation may be stored in a memory using data storage techniques such as taught in U.S. Patent Application No. 883,016, entitled Multiple Data Display System, filed October 3, 1983 in the names of M. Smutek, R. Wenig, N. Webb and A. Waisman, and assigned to the same assignee as the present patent application.

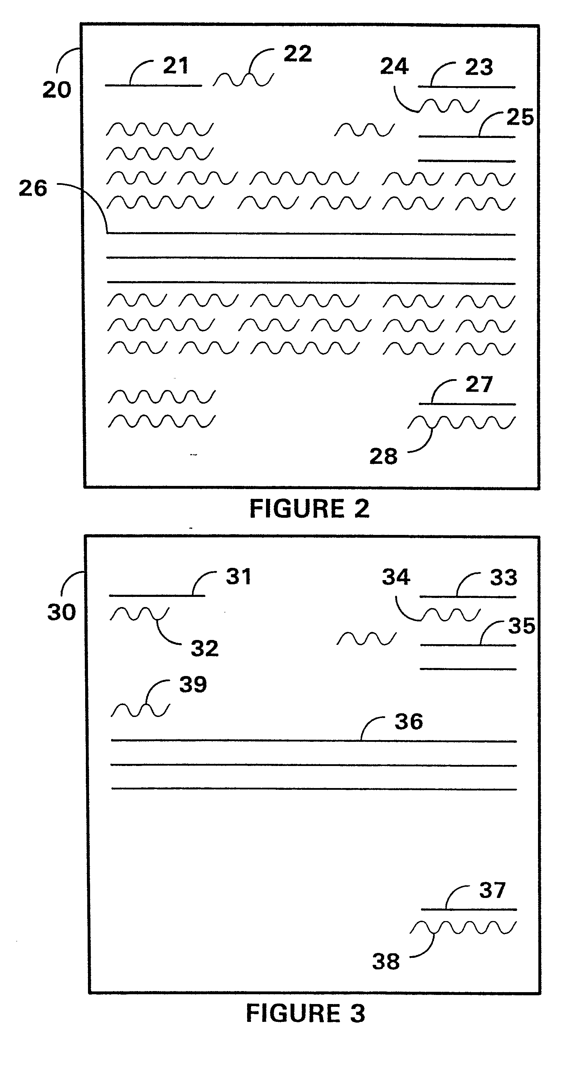

In Figure 2 is shown a representation of a pre-printed document or form 20 on which is printed alpha numeric material, such as that represented by reference numbers 22, 24 and 28, but on which are also located a number of blank spaces 21, 23, 25, 26 and 27 which are to be filled in to complete the form. Form 20 may also include pictorial or graphic material not shown in Figure 2.

Figure 3 shows a representation of the form template created for the exemplary form represented in Figure 2 using our invention. The user of the electronic office processing equipment shown in Figure 1 places form 20 in Figure 2 into daisy wheel printer 13. Daisy wheel printer 13 is well known in the art and has a platen-type roller feed and a moveable daisy wheel print head which moves horizontally along the length of the platen. The print head is moved to print characters on a piece of paper around the platen. Once form 20 is inserted into printer 13 the user of the electronic office processing system selects the Forms Mode of operation in a manner described in detail further in this detailed description. In the Forms mode the user operates the up, down, left and right cursor keys on the keyboard of video display terminal 10 to operate the platen of printer 13 and to move the print head along the platen. As the left cursor key is operated, the print head moves to the left side of the platen, and as the right cursor key is operated the print head is moved to the right end of the platen. As the user operates the up cursor key on the keyboard the platen roller is rotated to move a piece of paper upward, and as the down cursor key is operated the platen roller is rotated to move a piece of paper therein downward. By using the four cursor keys it can be appreciated that the daisy wheel print head may be moved in conjunction with the platen roller to place the daisy wheel print head anywhere on a piece of paper in the platen roller. This direct control is known in the prior art in the Wangwriter marketed by Wang Laboratories, Inc.

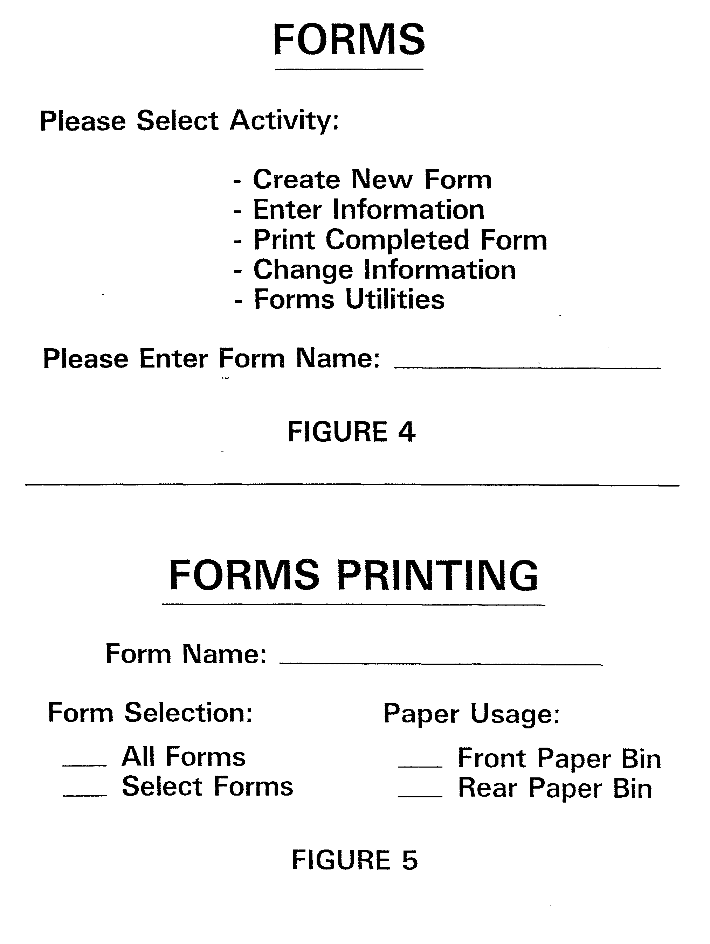

In the forms mode, form 20 in Figure 2 is inserted into the platen roller of daisy wheel printer 13. By operating the four cursor keys on the keyboard the user is first able to place the daisy wheel print head at the upper left corner of document 20 as a reference point and operates the EXECUTE key on the keyboard to provide an indication of same to microprocessor 11. The user repeats this process to place the print head at the left end of blank line 21 on document 20. The user operates the MARK key indicating to microprocessor 11 that this is the left hand end of blank 21. The user then operates the right cursor key to move the daisy wheel print head to the right along the platen roller to the right end of blank line 21. The user again operates the MARK key indicating to the system that the daisy wheel print head is positioned at the right hand end of blank line 21. At the same time the system draws a line 31 on video display 10 as shown in Figure 3. The user next operates the cursor keys to move the print head to the left hand end of blank line 23 on form 20, operates the MARK key to indicate the beginning of the blank line, then moves the print head to the right hand end of blank line 23 using the cursor keys and again operates the MARK key to indicate the end of the blank line. On video display terminal 10, line 33 is drawn representing blank line 23. This procedure is repeated for each of blank lines 25, 26 and 27 on pre-printed form 20. In Figure 3 it may be seen that lines 31, 33, 35, 36 and 37 are displayed on video terminal 10 in the same position, and having the same lengths as the corresponding blank lines on pre-printed form 20. The COPY key may be used to repeat whole fields, such as the multiple lines in space 26, 36. If the user doesn't wish to add captions 32, 34, 38 and 39, they operate the SAVE key which indicates to the system that the template entered is completed and is to be saved. The system stores the template in a file having a file name assigned by the system user as shown in Fig. 4 and described further in this specification.

In the pre-printed form 20 shown in Figure 2, there is typically appropriate information printed thereon indicating what information should

be entered into each blank. For example, alpha numeric information 22 indicates what information should go in blank line 21, alpha numeric information 24 indicates what information should go in blank line 23, and alpha numeric information 28 indicates what information should go in blank line 27. If the user had wanted to add captions 32, 34, 38 and 39 to the field lines, rather than operate the SAVE key after entering the blank lines 31, 33, 35, 36 and 37 the REF reference key would be operated. The user uses the cursor keys to move the cursor to the beginning position of each caption and then enters each caption 32, 34, 38, and 39. After all captions have been entered the SAVE key is operated and the template with captions (template 30 in Figure 3) is stored in memory. Such storage will be on a floppy diskette recorded using Diskette Unit 14, or on a hard disk (not shown) via networking interface 15. Form template 30 has all the blank lines that exist on pre-printed form 20 with sufficient descriptive information as captions to indicate what should be entered onto the blank lines. All other pre-printed information on form 20 is not entered into form template 30. The user is not prevented from entering all the alpha-numeric information on pre-printed form 20 into form template 30. However, graphical material may not be entered into Form template 30, but this is not necessary. This operation is described in greater detail herebelow with reference to Figure 4.

At a later time when it is desired to utilize form template 30 to enter information into the system, the user of the system tells the system via the keyboard and a menu on the display screen that they want the Enter/Change Form Information operation, identifies the form template to be utilized, and the digital representation of the form template is transferred to memory 12 within the processing system. The system then displays the selected form template on the display screen of video terminal 10 and the user enters information therein. This operation is described in greater detail below.

In practical business applications our novel forms mode of operation would be useful in any business in which standard forms are utilized every day. For example, an insurance company claims department receives telephone calls for insurance claims all the time. A claims clerk receiving these calls would use the keyboard 10 to indicate to the system an insurance claim form template to be utilized and then uses the displayed form template to record information pertaining to an insurance claim. Assuming that template 30 in Figure 3 is the selected claim form template, template 30 would be displayed on the screen of video terminal 10 used by the claims clerk. In response to each telephone claim, the claims clerk would enter basic pertinent information onto blank lines 31, 33, 35, 36 and 37. Upon template 30 being called up on the screen of video terminal 10, the cursor would initially be located at the left end of blank line 31. The clerk knows from caption 32 that the claimant's name is to be entered onto line 31. As the claims clerk types in the name of the claimant, it appears on blank line 31 on the screen of the video display. After entering the claimant's name, the RETURN key followed by the EXECUTE key is operated and the cursor moves to the left end of blank line 33.   The claims clerk knows from caption 34 that the date the claim is being made is to be entered onto blank line 33.   The claims clerk types in the date which then appears on line 33 and then operates the TAB key. The cursor moves to the left end of blank line 35 and the claims clerk knows from the adjacent caption that the address of the claimant is to be entered onto line 35.   Following entry of the claimant's address, the clerk again operates the TAB key and the cursor then moves to the left end of blank line 36.   Similarly, blank lines 36 and 37 are filled in with such information as details establishing the claimant's claim and the name of the claims clerk.   After all blank lines on forms template 30 are filled in, the operation of the CANCEL key followed by the EXECUTE key indicates to the system that the form is filled in and the entered information is stored.

The above described procedure is repeated many times each day by many claims clerks entering insurance claims, and thereby creates a large data base of claims information.

At a later time, maybe at the end of each day or the following day, it may be desired to generate a filled in pre-printed form.   To accomplish this a single form, such as pre-printed form 20, may be placed in daisy wheel printer 13 and the print head positioned at the upper left corner of the form.   Due to the movement of the daisy wheel printhead and the platen roller of daisy wheel printer 13 during creation of form template 30, the system is now able to move the printhead and the platen roller to position the printhead at the left end of each of blank lines 21, 23, 25, 26 and 27 in succession. At each of these blank lines, a particular set of stored information (information record), entered using form template 30, is printed on these blank lines to thereby complete the form. As it would be a tedious task to hand feed individual pre-printed forms into daisy wheel printer 13, in actual operation the forms would be fed by an automatic form feeder or would be linked end-to-end with rip-off perforations between the forms. In this manner daisy wheel printer 13 is operated under control of microprocessor 11 in the Forms Print template mode of operation to fill in the blank lines of a multiplicity of forms with the appropriate stored information from the data base of stored information records .

Turning now to Figure 4, therein is shown a Forms mode menu that appears on the screen of video terminal 10 after this mode of operation is selected from another menu, not shown, that lists many functions such as word processing, typewriter and the forms mode. As may be seen in Figure 4 the user of the system in the forms mode has five basic operations that may be selected. The user may select Create New Form, Enter Information to select a form for information entry, Print Completed Form wherein the pre-printed forms have their blanks filled in with stored information, Change Information which allows the user to edit already stored information, and a Forms Utilities mode providing miscellaneous functions which are described in detail further in this specification. For any one of these five selections, the user also enters the name of a form, which for entering, printing, changing or utilities is a previously created form

name; but for the creation of a new form template requires selecting and entering a new form name. After the appropriate function is selected by using the RETURN key to place the cursor adjacent thereto, the EXECUTE key is operated indicating to the system the function to be performed. The cursor moves to the Please Enter Form Name blank line, the user enters a form name using the keyboard of video terminal 10, and again operates the EXECUTE key. This indicates to the system the form to be worked with. For the Create New Form function the user makes up a form name and enters it into this blank. For the other functions the user enters an existing form name.

When the Enter Information function is selected the system uses the form name entered via the menu of Figure 4 to locate the particular form template and display it on the display screen of video terminal 10. The user then enters information and stores same as described earlier in this specification.

Turning now to Figure 5, therin is shown the screen menu displayed after the system user selects Print Completed Form from the menu in Figure 4. The header of this menu is entitled FORMS PRINTING and has a blank in which the form name is entered. The user usually does not have to enter the form name as they already did so in the screen menu of Figure 4. The form name is automatically carried forward and displayed in this space to indicate to the user the name of the form that they have selected. The blank line is on the menu of Figure 5 so that when the user is printing many forms, as may often be the case, they do not have to return to the menu of Figure 4 every time to do so. They merely initiate a print process for one form and then change the form name in the Form Name line of Figure 5 by overwriting and deleting in a manner well known in the art, and then reinitiate printing. In this manner the form name entered by the user on the menu of Figure 4 may also be changed in the event that an error was made or they change their mind. On the display of the menu shown in Figure 5 the cursor on the display screen initially appears in the blank adjacent to All Forms under the Form Selection column. By operating the RETURN key on the keyboard of video terminal 10, the user moves the cursor sequentially to Select Forms, Front Paper Bin, Rear Paper Bin, Form Name, and finally back to All Forms. The next operation of the Return key returns the cursor to the All Forms blank where the cursor initially appeared.

When All Forms is selected the user operates the EXECUTE key and all information records that have been entered for the particular form template will be printed as previously described. However, in the event that it is not desired to print all information records the user goes to Select Forms and can select particular records of stored information to be printed in the manner previously described. In response to picking Select Forms and operating the EXECUTE key the system uses the name of the form entered on this menu to locate all records stored for this form. All indexes for these records are displayed on the screen of the video display. When a form template is initially created, the user selects a field to be used as an index field. The information entered in the index field is then used to "key" the record for later retrieval. Adjacent to each of these indexes there is a blank to which the display cursor may be moved using the RETURN KEY on the display. The cursor is moved from record entry to record entry, and as the cursor is adjacent to a record that the user wishes to print out, the user operates the INSERT key to leave a marker in the blank adjacent to this record. After all records to be printed have been selected the user operates the EXECUTE key which returns the display to the menu of Figure 5 where the cursor is adjacent to Front Paper Bin. The user may also use the RETURN key to move the cursor to instead select Rear Paper Bin. Different pre-printed forms may be in these two bins and the user selects the desired form. These two entries are well known in the word processing art and correspond to an automatic paper feeder for a printer. After the user has used the RETURN KEY to position the cursor to select Front Paper Bin or Rear Paper Bin, the subsequent operation of the EXECUTE KEY indicates to the system to commence with printing the appropriate information from stored information records into the blanks of pre-printed forms.

Turning back to Figure 4, FORMS, the user can select Enter/Change Information to change stored information records. They do this by placing the cursor adjacent to this entry in the menu of Figure 4 and operating the EXECUTE key. The user enters a forms template name into the blank on the bottom of this menu which will cause the blank form template to be called up on the display screen. The user enters an index name and operates the RETURN key. If the record is found, the completed form is displayed on the screen. The user then uses the RETURN key to move the cursor adjacent to individual fields of information that are to be changed.

Using standard word processing functions such as Insert, Delete or overtyping, the user changes the recorded information in a manner well known in the word processing art. After a record has been corrected the user operates the SEARCH key to return to the index field and reuses the RETURN key to select another record to be edited. This procedure is repeated until all records to be edited have been edited. The user then operates the CANCEL key followed by the EXECUTE key which indicates to the system that all editing changes have been made, and the system changes the stored information records to include the editing changes. Following completion of the changes the system returns the system to display of the menu on Figure 4 with the cursor at Enter/Change Information.

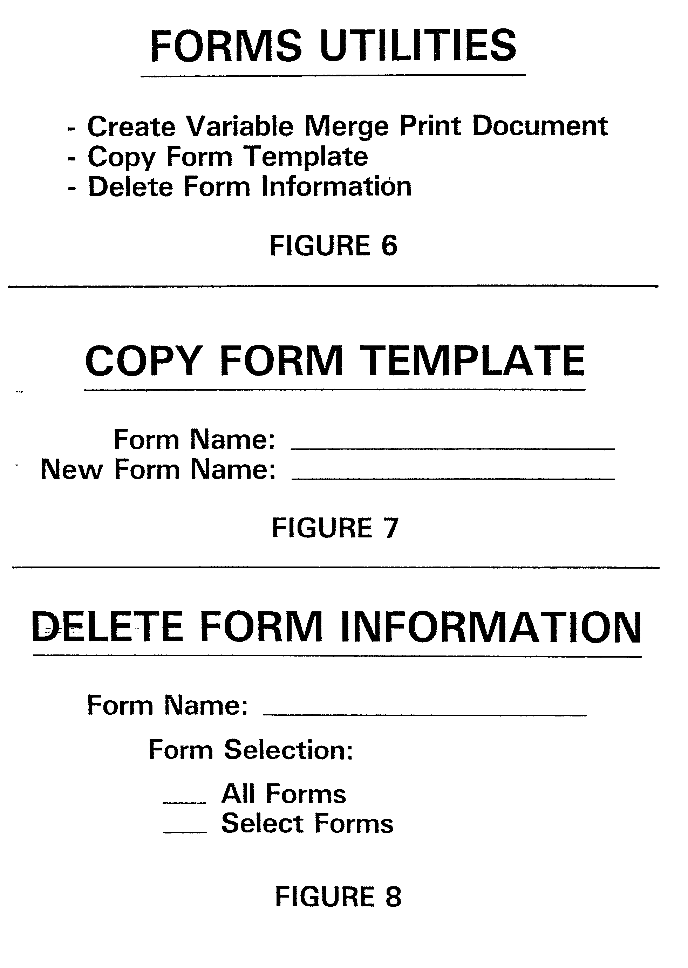

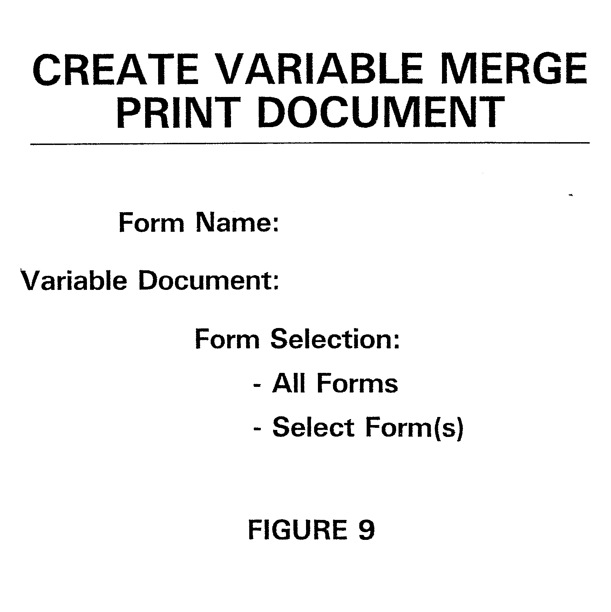

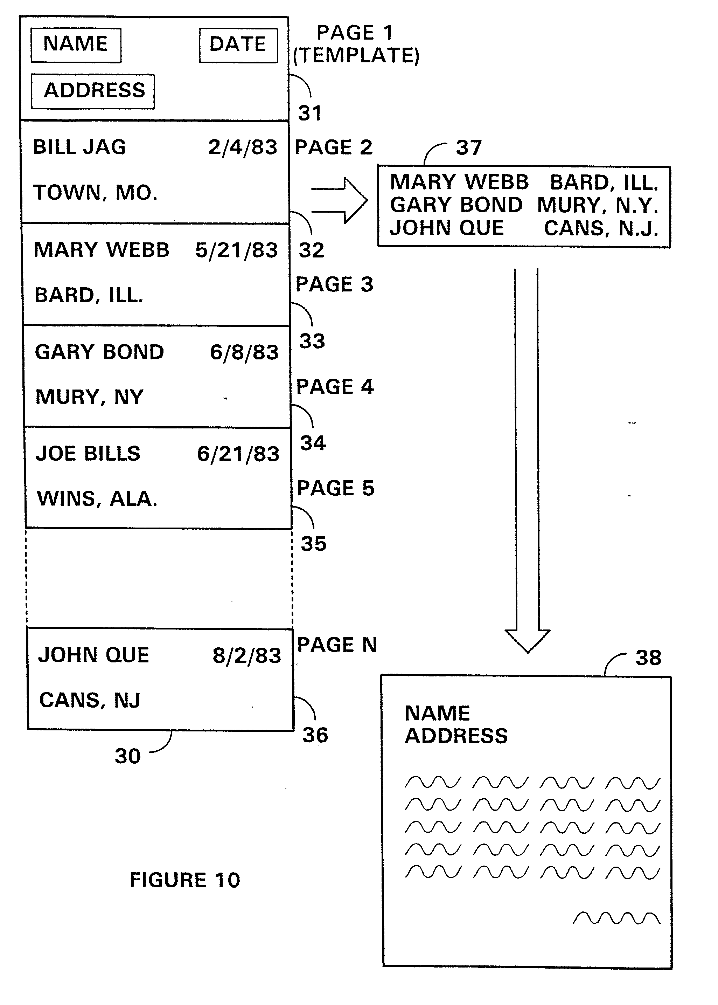

The last of the functions that may be selected on the FORMS menu shown in Figure 4 is Forms Utilities. Upon selection of this function in the same manner as the others were selected, the FORMS UTILITIES menu shown in Figure 6 is displayed. In this FORMS UTILITIES mode there are three functions which may be selected. The first of these three functions, is entitled Create Variable Merge Print Document and is used as described in greater detail hereinafter with reference to Figure 10. Briefly, this function is used to create merge information records that can be merged into form letters at a later time. This is represented in Figure 10 as selecting information records for use in preparing a form letter represented as letter 38. Upon selecting Create Variable Merge Print Document in the FORMS menu the next menu to appear on the display screen of video terminal 10 is entitled CREATE VARIABLE MERGE PRINT DOCUMENT and is shown in Figure 9. The cursor initially appears adjacent to Form Name and the user enters the title of the form template, data from stored information records of which is to be used for merge printing in a form letter as was briefly described above with reference to Figure 10, and will be described in detail further in this specification. Upon entering the title of the form template, the user operates the RETURN key and the cursor moves to the field entitled Variable Document where the user enters the identity of the document, such as document 38 in Figure 10, into which selected data from the information records for the identified form template will be entered in creating the merge document. After the identity of the Variable Document is entered and the RETURN key again operated, the cursor moves to the Forms Selection portion of the menu next to the line entitled All Forms. With reference to Figure 10, if the user wishes to print out say a form letter for each person for which there is an information record for the selected form template, the user operates the EXECUTE key and the system uses some or all the stored information as necessary to fill in the blanks of the merge document 38. In the present. example of form letter 38 in Figure 10, only the name and address information is used, and not the date information. However, if the user only wishes to select specific form template records represented in Figure 10 as pages 3, 4, and N in block 37, the user first picks Select Form(s) in the menu of Figure 9 and the tabular list of information indexes for the selected form template appears on the display screen. What appears on the display screen at this time is not exactly as shown by records 30 in Figure 10, but rather the same information but in a line fashion such as shown in block 37. The user uses the RETURN key to place the cursor adjacent to the desired information records and operates the INSERT key to place a mark thereby. When all information records have been selected for which a form letter will printed the EXECUTE KEY is operated.

Returning to the FORMS UTILITIES menu in Figure 6, the next field that may be selected by the user using the cursor in the manner already described, is Copy Form Template. This function is used to transfer the stored digital information representing a form template, represented as page 1 in Figure 10, to a new storage file. That is, when stored form template records are stored on floppy disks a maximum of 75 records typically can be stored on the diskette. It is likely that a number of diskettes may have to be created when they are used to store the information records. This does not happen when a large capacity memory is used. During the course of a day, an insurance claims clerk will be creating a large number of form template records, represented as pages 2 thru N in Figure 10, and some or all of these records may have to be printed onto the pre-printed forms. Wherever the information records are stored they have the form template stored with them as represented as page 1 of block 30 in Figure 10.

-19-

When Copy Form Template is selected from the FORMS UTILITIES menu by placing the cursor adjacent thereto with the RETURN key and then operating the EXECUTE key, the COPY FORM TEMPLATE menu shown in Figure 7 appears on the screen. This menu has two fields therein, and the display cursor initially appears adjacent to Form Name. This indicates to the system a particular form template identity already stored in memory. As there may be more than one floppy diskette used to store records information for a particular forms template, each such diskette must be distinguished from another diskette. To accomplish this, after the user has identified the basic identity of a form template in the field entitled Form Name, the RETURN KEY is operated which moves the cursor on the display screen adjacent to the field entitled New Form Name. In this latter field the user enters a new form name so that one diskette may be distinguished from another diskette. This is relatively simple. For example, if the identity of the forms template entered in the first field entitled Form Name is CLAIMS 1, the user would typically enter CLAIMS 2 in the field entitled New Form Name. For subsequent diskettes in which are stored alike claims information, the user would change the numerical suffix to a 2, 3 and so on so that later diskettes would have a form name such as CLAIMS 18. After the new form name has been entered in New Form Name, the user operates the EXECUTE key which indicates to the system that the user has completed entry of information in these two fields. The system then functions to operate with diskette unit 14 in Figure 1 to write on a diskette inserted thereon the new form name and a number of form template information records, such as represented by pages 2 thru N in Figure 1C.

This process is repeated until a diskette is filled with information and a new diskette must be used to store additional information.  At that time, the procedure just described is repeated to create a new diskette.


Returning to the FORMS UTILITIES menu in Figure 6, the third field therein is entitled Delete Form Information.  This field is selected when it is desired to delete information records for a form template.  For example, with reference to Figure 10, if it is desired to delete information record 35, shown as page 5, the Delete Form Information function is utilized.  The user places the cursor on the display screen adjacent to Delete Form Information and operates the EXECUTE key to select this function.  What appears on the screen is the menu entitled DELETE FORM INFORMATION shown in Figure 8.  There are three fields on this screen menu in which the user is to select information.  The cursor initially appears adjacent to the field entitled Form Name.  The user enters the identity of the form template, records for which are to be deleted, and then operates the RETURN key.  The cursor moves adjacent to the field entry entitled All Forms under Form Selection.  This field entry is selected when it is desired to completely erase all record entries for a particular form template.  More often than not the user will only desire to delete selected information record entries and will reoperate the RETURN key to move the cursor adjacent to Select Forms.  The operator then operates the EXECUTE key.  What then appears on the display screen is a list of information indexes stored in the system for the chosen form template in the tabular form generally shown as block 37 in Figure 10.

The user is able to utilize the RETURN key to position the cursor adjacent to particular line information record entries representing entries 32 thru 36. The user moves the cursor adjacent to each information record entry that is to be deleted and operates the INSERT key to place a mark thereby. After such a mark has been placed by each information record that is to be deleted from memory the EXECUTE key is operated, and the microprocessor responds thereto to delete those records from memory. In this manner the user of our novel system is able to edit information record entries and delete those that are no longer of any use.

In Figure 10 is shown a general representation of stored form template information records. As previously described, with reference to the creation of a form template, a form template is created and appropriate digital information is generated indicating locations, titles and sizes of fields in a form template. This information is stored and used to call the form template up onto the display screen for the entry of information records, and to print previously stored information onto the pre-printed forms. In Figure 10, the binary information representing a form template is shown as page 1, block 31. The binary information representing a form template and stored information records may be stored in memory 12, shown in Figure 1, may be stored on conventional floppy diskettes, or may be stored in a larger memory. As previously mentioned, with reference to Figure 1, diskette unit 14 is part of a system utilizing our invention and would be utilized to store information on floppy diskettes. Wherever information records are stored there must also be stored thereat the binary information representing the associated form template. In Figure 10, block 30 represents a block of memory, whether a bulk hard disk memory or a floppy diskette, in which is stored the binary information representing a form template and a number of form template records. Area 31 is that portion of memory, of whatever type, in which is stored the binary information representing a form template. Stored thereafter in the memory are a number of information records as pages 2 thru N and shown as areas 32 thru 36 within block 30. In the simple example described herein, the form template only includes NAME, ADDRESS and DATE. As previously described, the user of the system calls up a form template onto the screen of the video display 10 and enters these three types of information. After the information has been entered, it is stored in memory as represented by one of pages 2 thru N. As previously described these form template information records, represented as pages 2 thru N, may be deleted or edited and displayed in tabular form as generally represented in block 37. Block 37 is incomplete in that it represents a selection of form template information records for merge printing. However, it is representative of the fact that the form template information records stored in memory, of whatever form, may be called up onto the display screen of video terminal 10.

While what has been described herein above is a preferred embodiment of our invention, it will be recognized by those skilled in the art that numerous changes may be made without departing from the spirit and scope

**0158766**

of our invention. For example, form templates and form template information records may be stored in a remote memory shared by a number of terminals. Or, the menus displayed on the display screen of the video terminal may be varied from that disclosed herein.

PATENTANWÄLTE

# WUESTHOFF-v.PECHMANN-BEHRENS-GOETZ
### EUROPEAN PATENT ATTORNEYS

: **0158766**

6)

\ \

D-8000 MÜNCHEN 90
SCHWEIGERSTRASSE 2

TELEFON: (089) 66 20 51
TELEGRAMM: PROTECTPATENT
TELEX: 524 070
TELEFAX: VIA (089) 27 60 63 (III)

EP-58 828

Wang Laboratories, Inc.

Lowell, USA

What we claim is:

1. A method of operating with pre-printed forms on electronic office processing equipment including a processor, video display, keyboard, memory and printer, characterized by the steps of:
creating a form template on the video display for a pre-printed form, the template consisting of blank lines of the same length and in the same relative positions to each other as on the pre-printed forms, and having captions adjacent to each blank line indicating the type of information to be entered thereon,
storing the form template in the memory of the processing equipment,
retrieving the form template from the memory and displaying it on the video display when it is desired to enter information for the last mentioned pre-printed form;
entering appropriate information onto the blank lines on the form template displayed on the video display; and storing the information entered onto the blank lines of the form template displayed on the video display.

2. The method in accordance with claim 1 wherein the step of creating a form template is characterized by the steps of:
identifiying the position and length of each blank on the pre-printed form to the processor using the keyboard and the printer;

storing the data representing the position and length of
each blank on the pre-printed form;
displaying the blanks as blank lines on the video display using the stored data, wherein each the line is of
the same length and in the same physical positions to each
other as the blanks on the pre-printed form; and
editing the last mentioned display on the video display
to add captions adjacent to each blank line indicating the
type of information to be entered onto the line, the
lines and the captions creating the form template.

3.    The method in accordance with claim 1 or 2, wherein
the information entered into the form template creates an
information record and many information records are
created using the form template,
characterized by the steps of:
feeding ones of the pre-printed forms into the printer,
selecting one or more of the stored information records
entered via the form template to be printed onto the
pre-printed forms;
controlling the printer using the selected information
records to print the informaton in the blanks on ones of
the pre-printed forms.

4.    The method in accordance with claim 3,
further characterized by the steps of:
listing all the stored information records entered at
different times using the form template;
selecting from the list ones of the last mentioned
information records to be printed into the blanks of ones
of the pre-printed forms using the printer; and
printing each selected information record in the blanks of
one of the pre-printed forms.

5.   The method in accordance with claim 4
further characterized by the steps of:
listing all the stored information records entered using
the form template;
selecting ones of the stored information records to be
deleted from storage in the memory; and
deleting the last mentioned selected ones of the stored
information records from the memory.

6.   The method in accordance with claim 5
further characterized by the step of:
modifying selected ones of the stored information records
entered using the form template.

7.   The method in accoreance with claim 6
further characterized by the steps of:
selecting a form document having blanks thereon to be
filled in to complete the form document; and
merge print appropriate information from the stored
information records with the form document to complete
same.

8.   Electronic office processing equipment

    comprising a processor (11), expecially a microprocessor, a video terminal with a keybord (10)
    functioning with the processor, memory (12) and a
    printer (13) having a rotatable platen and a movable
    print head,
for creating and storing a template (30) for a pre-printed
form (20) having blanks thereon in which information is to
be entered, and the template (30) is used for storing and
later printing out said information entered into said
blanks on the form for carrying out the method according
to claim 1, characterized in that

both the platen and the print head are responsive to the processor (11) and to the keyboard (10) to place the print head first at a corner of the pre-printed form (20), then at the beginning and the end of each blank space (21, 23, 25, 26, 27) on the pre-printed form (20) in which information is to be entered, to identify to the processor (11) the location of each blank space; and

that the processor (11) displays on the video terminal (10) lines (31, 33, 35, 36, 37) of the same length and in the same positions to each other as the blanks (21, 23, 25, 26, 27) on the pre-printed form (20), the keyboard (10) then being used to provide inputs to the processor which responsive thereto causes captions (32, 34, 35, 39) to be placed adjacent to the lines, the captions indicating the type of information to be entered on the lines and the lines and the captions making up the form template (30).

9.    The electronic office processing equipment in accordance with claim 8,

characterized by

a memory (12) in which the form template (30) is stored after creation, and the form tempalte (30) is read out of the memory (12) and displayed on the video display (10) under controll of the keyboard (10) and the processor (11), the keyboard (10) being used to enter information into the form template (30) and to indicate to the processor (11) to store the information entered on the template form (30), and

a cursor on the video display (10) responsive to the keyboard (10) and the processor (11) to be moved to the blank lines (31, 33, 35, 36, 37) on the form template (30) displayed thereon, to enter information on blank lines of the displayed forms template (30) and to indicate to the processor (11) when all information has been entered so that the information may be stored.

0158766

10. The electronic office processing equipment in accordance with claim 9,

characterized in that

to the stored information each time the pre-printed form (20) is placed in the printer (13) and its platen and print head are moved to each blank space (21, 23, 25, 26, 27) on the form (20) under control of the processor (11) using the form template (30) blank line location information, and the appropriate stored information is printed on the blank lines of the pre-printed form (20).

1058

FIGURE 1

0158766

**FIGURE 2**

**FIGURE 3**

3/6

# FORMS

Please Select Activity:

- Create New Form
- Enter Information
- Print Completed Form
- Change Information
- Forms Utilities

Please Enter Form Name: _____

FIGURE 4

# FORMS PRINTING

Form Name: _____

Form Selection:          Paper Usage:

____ All Forms          ____ Front Paper Bin
____ Select Forms       ____ Rear Paper Bin

FIGURE 5

4/6

# FORMS UTILITIES

- Create Variable Merge Print Document
- Copy Form Template
- Delete Form Information

## FIGURE 6

---

# COPY FORM TEMPLATE

Form Name: _____

New Form Name: _____

## FIGURE 7

---

# DELETE FORM INFORMATION

Form Name: _____

Form Selection:

____ All Forms
____ Select Forms

## FIGURE 8

# CREATE VARIABLE MERGE PRINT DOCUMENT

Form Name:

Variable Document:

Form Selection:

- All Forms

- Select Form(s)

FIGURE 9

PAGE 1
(TEMPLATE)

| NAME | DATE |
|------|------|
| ADDRESS | |

31

| | | PAGE 2 |
|---|---|---|
| BILL JAG | 2/4/83 | |
| TOWN, MO. | | |

32

| MARY WEBB | 5/21/83 | PAGE 3 |
|---|---|---|
| BARD, ILL. | | |

33

| GARY BOND | 6/8/83 | PAGE 4 |
|---|---|---|
| MURY, NY | | |

34

| JOE BILLS | 6/21/83 | PAGE 5 |
|---|---|---|
| WINS, ALA. | | |

35

| | | PAGE N |
|---|---|---|
| JOHN QUE | 8/2/83 | |
| CANS, NJ | | |

36

30

37

| MARY WEBB | BARD, ILL. |
|-----------|-----------|
| GARY BOND | MURY, N.Y. |
| JOHN QUE | CANS, N.J. |

38

NAME
ADDRESS

FIGURE 10

0158766
Application number

EP 85 10 0013

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | IBM TECHNICAL DISCLOSURE BULLETIN, vol. 18, no. 11, April 1976, page 3552, New York, US; A.K. COOK et al.:"Form log and printing" * Whole article * | 1-3,8 | G 06 F 15/20 |
| Y | EP-A-0 067 303 (IBM) * Abstract; page 2, lines 25-34 * | 1-3,8 | |
| Y | IBM TECHNICAL DISCLOSURE BULLETIN, vol. 19, no. 8, January 1977, page 2921, New York, US; J.S. COENEN et al.: "Interactive forms positioning with delayed print" * Whole article * | 1-3,8 | |
| A | IBM TECHNICAL DISCLOSURE BULLTIN, vol. 21, no. 11, April 1979, pages 4323-4329, New York, US; R.J. GERLACH et al.: "System for simplified form fill-in using CRT display" | | TECHNICAL FIELDS SEARCHED (Int. Cl.4)<br><br>G 06 F 15/20 |
| A | IBM TECHNICAL DISCLOSURE BULLETIN, vol. 22, no. 9, February 1980, page 3917, New York, US; J.W. RICE et al.: "Word processing terminal with dual display" | | |

The present search report has been drawn up for all claims

| Place of search | Date of completion of the search | Examiner |
|---|---|---|
| THE HAGUE | 16-07-1985 | BARRACO G.S. |